# EUROPÄISCHE PATENTSCHRIFT

(11) **EP 0 404 083 B1**
(45) Veröffentlichungstag und Bekanntmachung des Hinweises auf die Patenterteilung: **20.01.1993**
(21) Anmeldenummer: 90111607.9
(22) Anmeldetag: 20.06.1990
(51) Int. Cl.: A01F 15/08

(54) **Spreizrolle zum Breithalten von Umhüllungsmaterial für Rundballen in einer Rundballenpresse**
Widening roll for expanding packaging material for round bales in a rotobaler
Rouleau d'élargissement pour élargir la feuille d'emballage pour balles rondes dans une presse à balles rondes

(30) Priorität: 23.06.1989 US 370538
(43) Veröffentlichungstag der Anmeldung: 27.12.1990
(73) Patentinhaber: DEERE & COMPANY, Moline, Illinois 61265 (US)
(72) Erfinder: Anstey, Henry Dennis, Ottumwa, Iowa 52501 (US)
(74) Vertreter: Feldmann, Bernhard

(56) Entgegenhaltungen:
- EP-A- 0 114 166
- US-A- 4 729 213

## Beschreibung

Die Erfindung bezieht sich auf eine Spreizrolle zum Breithalten von Umhüllungsmaterial für Rundballen in einer Rundballenpresse, wobei die Spreizrolle eine glatte Mantelfläche aufweist und zumindest im Bereich ihrer Stirnseiten mit nach außen gerichteten gegenläufigen Wendeln versehen ist.

Spreizrollen in Rundballenpressen dienen dazu, das beispielsweise von dem fertig gewickelten Rundballen in die Ballenkammer gezogene Umhüllungsmaterial in Form von Netzen oder plastischem Streifenmaterial auf einer Breite zu halten, die der Rundballenbreite entspricht. Hierzu dienen die Wendeln, die bei der eingangs berücksichtigten Spreizrolle auf deren Mantelfläche aufgeschweißt sind (US-A-4 729 213). Das Aufschweißen ist zunächst kostspielig und birgt den weiteren Nachteil in sich, daß scharfe Kanten entstehen, die zu einem Reißen oder anderen Beschädigungen des Umhüllungsmaterials führen können. Auch ist beim Schweißen nicht gewährleistet, daß die Wendel auf der Mantelfläche satt aufliegt, wodurch die Ausbreitwirkung der Wendel beeinträchtigt wird.

Die mit der Erfindung zu lösende Aufgabe wird in einer verbesserten Befestigung der Wendel auf der Mantelfläche gesehen. Diese Aufgabe ist dadurch gelöst worden, daß die beiden Wendeln auf ihrer gesamten Länge auf der Mantelfläche reibschlüssig aufsitzen und jeweils ein radial nach innen abgebogenes Ende aufweisen, das in je eine Öffnung in der Mantelfläche eingreift. Hierdurch ist eine kostengünstige und besonders einfache Befestigung für die Wendeln auf der Mantelfläche geschaffen. Ein Festschweißen wird überflüssig.

Für die reibschlüssige Verbindung wird nach der Erfindung ferner vorgeschlagen, daß jede Wendel aus einem spiralförmig gewundenen Material besteht und der Wendelinnendurchmesser kleiner ist als der Außendurchmesser der Mantelfläche, solange die Wendel nicht auf die Mantelfläche aufgespannt ist. Zum Aufspannen der Wendel auf die Mantelfläche braucht dann jede Wendel nur vermittels ihrer Enden "aufgedrückt" zu werden, wodurch sich deren Innendurchmesser kurzzeitig vergrößert und ein leichtes Aufschieben ermöglicht wird.

Zweckmäßig ist nach der Erfindung außerdem noch vorsehbar, daß jede Wendel in ihrem nicht auf der Mantelfläche aufliegenden Bereich abgerundete und keine Kanten bildende Flächen aufweist. Hierzu können die Wendeln in ihrem Querschnitt kreisförmig ausgebildet sein.

Besonders einfach lassen sich die vorstehenden Vorteile erreichen, wenn die Wendeln aus Draht hergestellt sind.

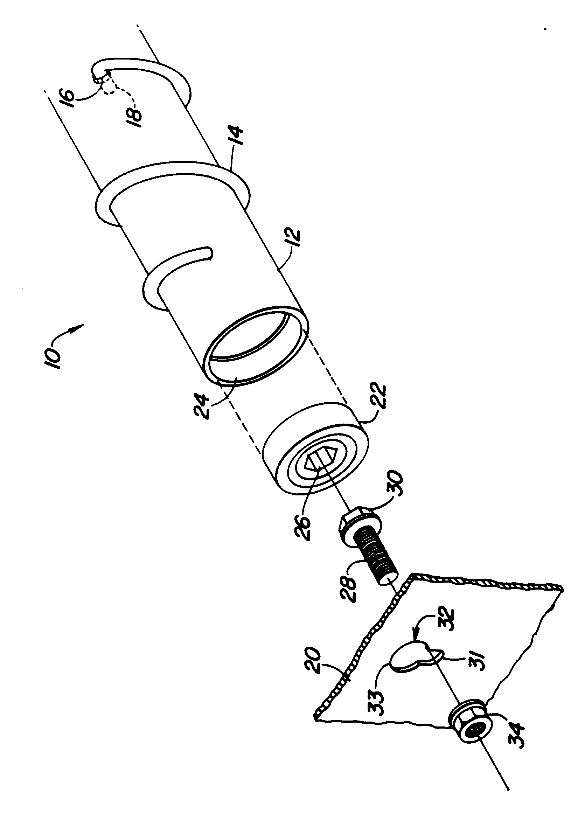

In der Zeichnung mit einer einzigen Figur ist ein nachfolgend näher erläutertes Ausführungsbeispiel der Erfindung dargestellt.

Die Zeichnung zeigt den Endteil einer Spreizwalze 10, wie sie in Rundballenpressen zum Ausbreiten und Halten auf dieser Breite von in ihr eingeführtem Umhüllungsmaterial Verwendung finden kann. Das Umhüllungsmaterial dient zum Umwickeln eines in der Rundballenpresse gewickelten Ballens aus Heu, Stroh oder dergleichen und kann aus Netzwerk aus Garn oder plastischem Vollmaterial bestehen. Die Spreizwalze 10 weist eine glatte Mantelfläche 12 auf, ist hohlförmig ausgebildet und im Bereich ihrer beiden Endteile mit spiralförmigen sowie gegenläufigen Wendeln 14 versehen, die zum beiderseitigen Ausbreiten zu den Stirnenden hin des von ihr erfaßten Umhüllungsmaterials dienen, das heißt die Walzen spreizen das Umhüllungsmaterial und halten es auch beim Abwickelvorgang auf dieser Breite.

Jede Wendel 14 beim gezeigten Ausführungsbeispiel besteht aus einem spiralförmig gewundenen Draht mit vorzugsweise rundem Querschnitt. Die Windungen haben, wenn sie sich noch nicht auf der Mantelfläche 12 der Spreizwalze 10 befinden, einen Innendurchmesser, der etwas kleiner ist als der Außendurchmesser der Mantelfläche 12, so daß die Wendeln 14 nach ihrem Aufsetzen auf die Walze gegen die Mantelfläche 12 fest anliegen und mit dieser einen Reibschluß bilden. Die Wendeln 14 können aber auch aus einem langen Blechstreifen oder Eisen bestehen, das eine Oberflächencharakteristik aufweist, die für das Erfassen und Nach-Außen-Bewegen des Umhüllungsmaterials geeignet ist. Zum Aufspannen auf die Spreizwalze werden die Wendeln 14 so gedrückt, daß sie die Tendenz haben, sich auseinanderzuwickeln, wobei sich ihr Innendurchmesser vergrößert und ein Aufschieben auf die jeweiligen Enden der Spreizwalze 10 möglich wird. Mit Abstand zu dem jeweiligen Stirnende ist in die Mantelfläche 12 der Spreizwalze 10 je eine sich radial erstreckende Öffnung 16 eingearbeitet, in die ein jeweils radial abgebogenes inneres Ende 18 der entsprechenden Wendel 14 eingesetzt werden kann.

Der Antrieb der Spreizwalze erfolgt durch den Reibkontakt mit dem Umhüllungsmaterial, wenn letzteres von der Material- oder Zuführwalze über Einzugsrollen abgezogen oder den sich in der Ballenkammer drehenden Ballen eingezogen wird. Hierbei zeigt das Umhüllungsmaterial die Tendenz, sich mittig zusammenzuziehen, was durch die nach außen "fördernden" Wendeln verhindert wird. Die Spreizwalze 10 selbst erstreckt sich zwischen gegenüberliegenden Tragteilen 20 oder Seitenteilen bzw. -wänden, von denen in der Zeichnung nur eine dargestellt ist. Sie ist in diesen Tragteilen 10 drehbar angeordnet, wozu zwei identische Lagerelemente gehören, von denen ebenfalls nur ein einziges in der Zeichnung dargestellt ist. Jedes Lagerelement weist ein Lager 22, vorzugsweise ein Kugellager, mit einem Außenring auf, der in eine ringförmige Ausdrehung 24 eingepreßt ist, die ihrerseits in den inneren Stirnseiten der hohlen Walze 10 gedreht werden. Die Innenringe eines jeden Lagers 22 sind beide mit einer sechskantförmig ausgebildeten Bohrung 26 versehen und dienen zur Aufnahme eines entsprechend sechskantförmig ausgebildeten Kopfes 30 einer mit einem Ringflansch versehenen Schraube 28. Hierbei kann jeder Kopf 30 in die zugehörige Bohrung 26 eingepreßt werden. Die mit Gewinde versehenen Schaftteile der Schrauben 28 erstrecken sich von den beiden Stirnseiten der Walze 10 nach außen durch den kleineren Lochteil 31 einer schlüssellochähnlich ausgebildeten Öffnung 32 in den beiden Tragteilen 20, wobei die größeren Lochteile 33 der schlüssellochähnlichen Öffnungen 32 vertikal über den kleineren Lochteilen 31 liegen. Auf die Schaftteile der Schrauben 28, die so ausgebildet sein können, daß sie sich in den kleineren Lochteilen 33 nicht drehen lassen, werden Muttern 34 aufgeschraubt, die ebenfalls einen Ringflansch aufweisen können.

## Patentansprüche

1. Spreizrolle (10) zum Breithalten von Umhüllungsmaterial für Rundballen in einer Rundballenpresse, wobei die Spreizrolle (10) eine glatte Mantelfläche (12) aufweist und zumindest im Bereich ihrer Stirnseiten mit nach außen gerichteten gegenläufigen Wendeln (14) versehen ist, dadurch gekennzeichnet, daß die beiden Wendeln (14) auf ihrer gesamten Länge auf der Mantelfläche (12) reibschlüssig aufsitzen und jeweils ein radial nach innen abgebogenes Ende (18) aufweisen, das in je eine Öffnung (16) in der Mantelfläche (12) eingreift.

2. Spreizrolle nach Anspruch 1, dadurch gekennzeichnet, daß jede Wendel (14) aus einem spiralförmig gewundenen Material besteht und der Wendelinnendurchmesser kleiner ist als der Außendurchmesser der Mantelfläche (12), solange die Wendel (14) nicht auf die Mantelfläche (12) aufgespannt ist.

3. Spreizrolle nach Anspruch 1 oder 2, dadurch gekennzeichnet, daß die Wendel (14) in ihrem nicht auf der Mantelfläche (12) aufliegenden Bereich abgerundete und keine Kanten bildende Flächen aufweist.

4. Spreizrolle nach Anspruch 3, dadurch gekennzeichnet, daß die Wendeln (14) in ihrem Querschnitt kreisförmig ausgebildet sind.

5. Spreizrolle nach einem oder mehreren der vorherigen Ansprüche, dadurch gekennzeichnet, daß die Wendeln (14) aus Draht hergestellt sind.

## Claims

1. Spreading roller (10) for maintaining the width of packaging material for round bales in a rotobaler, the spreading roller (10) having a plain shell (12) and being provided with outwardly directed coils (14) of opposite orientation at least in the region of its ends, characterised in that the two coils (14) are mounted on the shell (12) in frictional contact throughout their length and each has an end (18) bent radially inwards which engages in each case in an aperture (16) in the shell (12).

2. Spreading roller according to claim 1, characterised in that each coil (14) consists of a spirally wound material and the inner diameter of the coil is smaller than the outer diameter of the shell (12) as long as the coil (14) is not stretched on to the shell (12).

3. Spreading roller according to claim 1 or 2, characterised in that the coil (14) has surfaces which are rounded and do not form any edges in their region not bearing on the shell (12).

4. Spreading roller according to claim 3, characterised in that the coils (14) are of circular form in cross-section.

5. Spreading roller according to one or more of the preceding claims, characterised in that the coils (14) are made of wire.

## Revendications

1. Rouleau d'élargissement (10) pour élargir la feuille d'emballage de balles rondes dans une presse à balles rondes, le rouleau d'élargissement (10) présentant une face d'enveloppe lisse (12) et étant pourvu, au moins dans la région de ses côtés frontaux, d'hélices en sens contraires (14) dirigées vers l'extérieur, **caractérisé** en ce que les deux hélices (14) reposent sur toute leur longueur par adhérence sur la face d'enveloppe (12) et présentent chacune une extrémité (18) recourbée radialement vers l'intérieur, qui s'engage dans une ouverture respective (16) pratiquée dans la face d'enveloppe (12).

2. Rouleau d'élargissement selon la revendication 1, **caractérisé** en ce que chaque hélice (14) est constituée d'un matériau enroulé en spirale, et le diamètre intérieur de l'hélice est inférieur au diamètre extérieur de la face d'enveloppe (12), tant que l'hélice (14) n'est pas fixée sur la face d'enveloppe (12).

3. Rouleau d'élargissement selon la revendication 1 ou 2, **caractérisé** en ce que l'hélice (14) présente, dans sa région ne reposant pas sur la face d'enveloppe (12), des faces arrondies et ne formant pas d'arêtes.

4. Rouleau d'élargissement selon la revendication 3, **caractérisé** en ce que les hélices (14) sont réalisées de section circulaire.

5. Rouleau d'élargissement selon l'une des revendications précédentes, **caractérisé** en ce que les hélices (14) sont réalisées en fil métallique.
